# NEUE EUROPÄISCHE PATENTSCHRIFT

(11) **EP 0 906 720 B2**
(45) Veröffentlichungstag und Bekanntmachung des Hinweises auf die Entscheidung über den Einspruch: **12.07.2006**
(45) Hinweis auf die Patenterteilung: 05.11.2003
(21) Anmeldenummer: 98115144.2
(22) Anmeldetag: 12.08.1998
(51) Int. Cl.: A01B 69/00, A01D 41/12

(54) **Vorrichtung und Verfahren zur berührungslosen Erkennung von Bearbeitungsgrenzen oder entsprechenden Leitgrössen**
Device and method to recognize without contact the working boundaries or the correspondant guiding size
Appareil et méthode pour la reconnaissance sans contact des limites de la zone de travail ou de sa taille correspondante

(30) Priorität: 04.10.1997 DE 19743884
(43) Veröffentlichungstag der Anmeldung: 07.04.1999
(73) Patentinhaber: CLAAS Selbstfahrende Erntemaschinen GmbH, 33428 Harsewinkel (DE)
(72) Erfinder: Homburg, Helmut, 33428 Harsewinkel (DE)

(56) Entgegenhaltungen:
- EP-A- 0 801 885
- EP-A- 0 843 959
- EP-A- 0 878 121
- EP-A- 0 887 660
- DE-A- 2 423 689
- DE-A- 3 516 745
- DE-C- 4 431 824
- US-A- 5 509 486
- US-A- 5 715 665
- US-A- 5 715 666

## Beschreibung

Die Erfindung betrifft eine Vorrichtung und Verfahren zur berührungslosen Erkennung von Bearbeitungsgrenzen oder entsprechenden Leitgrößen.

Eine derartige Vorrichtung ist aus der deutschen Patentanmeldung 24 55 836 bekannt. Die dort geoffenbarte Vorrichtung beinhaltet eine Sende- und Empfangseinheit, die in Fahrtrichtung gesehen nach vorn und zum Bestand in einem spitzen, zugleich etwas abwärts zum Boden hin gerichten Winkel berührungslos eine Erntegutkante ortet. Aus der Reflexion wird dann nach verschiedenen Auswerteverfahren ein Lenksignal generiert. Die Sendeeinheit arbeitet mit schmalbandigen Lichtstrahlern, Polarisatoren und Modulatoren, kurzwelligen stark gebündelten elektromagnetischen Wellen oder Schallwellen. Die reflektierten Signale werden im Vergleich zu einem Sollwert ausgewertet und einer automatischen Lenkeinrichtung derart zugeführt, daß der seitliche Abstand Schneidwerkskante/ Erntegutkante minimiert wird. Um eine noch bessere Kantenidentifikation zu erhalten, wird die Einrichtung um eine annähernd vertikale Achse periodisch verschwenkt und aus dem Mittelwart der Empfangssignalen die Lage der Kante bezogen auf einen Sollwert generiert.

Nachteil dieser Einrichtung sind die Anbringung der Einrichtung an der Maschine und die Auswertung der Sensorsignale. Die offenbarte Einrichtungsanordnung ist nur bedingt für die Erkennung einer Bestandskante geeignet Hierbei wird der Abtaststrahl seitlich von der Bestandskante reflektiert und aus dem empfangenen Signal die Entfernung zur Kante bestimmt. Durch Bodenunebenheiten oder einer verringerten Bestandshöhe kann es vorkommen, daß die Einrichtung die Entfernung zum Boden oder oberhalb des Bestandes ermittelt. Es bedarf daher einer feinen Justierung und einer exakten Einhaltung des Abtastortes an der Kante. Dies ist nur unter hohen Aufwendungen zu realisieren. Daher haben an sich bekannte variable Größen wie Bestandshöhe, Arbeitshöhe, Maschinen- und Geländeneigungsänderungen gemeinsam oder auch einzeln einen starken Einfluß auf das empfangene Signal. Werden dann andere, geoffenbarte Auswertungen gewählt oder wie zur Veibesserung der Auswertung vorgeschlagen, der Sender um eine vertikale Achse verschwenkt, so arbeitet die Einrichtung nur dann befriedigend, wenn der Reflexionsgrad an und um eine Bestandskante konstant ist. Es hat sich aber gezeigt, daß solche optimalen Arbeitsbedingungen selten vorkommen und dadurch ein zufriedenstellendes Arbeitsergebnis versagt bleibt.
Beim Einsatz der Einrichtung an einer andersartigen Kante oder Bearbeitungsgrenze, bei der auf beiden Seiten der Grenze gleiche Reflexionsverhältnisse herrschen, wie beispielsweise bei einer Pflugfurche, versagt die Entfernungsmessung insofern, daß nur ein Zweipunktregelkreis realisiert werden kann. Dieses führt aber wie bekannt zu einem ungenügenden Arbeitsergebnis. Wird hier der Sender um eine vertikale Achse verschwenkt, verbessert sich dadurch die Identifikation nicht. Der Mittelwert über einer Spur, gleich welches Auswerteverfahren gewählt wird, ist von dem Reflexionsgrad und der Breite der Spur abhängig und gibt keinen Aufschluß überdie Lage der Spurzum Arbeitswerkzeug. Die Vorrichtung und Auswertung eignet sich daher nur bedingt zur Erkennung einer Bearbeitungskante.

In einer weiteren deutschen Patentschrift 195 08 942 wird eine Selbstlenkvorrichtung geoffenbart bei der eine Ortungsvorrichtung oberhalb des Getreides beabstandet so angeordnet ist, daß die Ortungssignale etwa senkrecht zum Schneidwerksmesser schräg von oben die Bearbeitungskante orten.
Es werden verschiedene Ortungssignale und Signalauswertungen geoffenbart, dabei wird von einer Ortungsvorrichtung das unbearbeitete und bearbeitete Feldstück erfaßt. Dies geschieht durch eine Ultraschallkeule oder einen Laserscanner. In einer besonders einfachen Ausführung wird durch zwei Laserteilortungsstrahlen eine Zweipunktregelung realisiert.
Gravierender Nachteil dieser Ortungsvorrichtungen ist die Auswertung der Empfangssignale. Ein Laserscanner ist nur für die Erkennung einer im Höhenprofil erkennbaren Kante oder Spur einsetzbar. An häufig vorkommenden Lagerstellen im Getreidebestand versagt das System.
Auch müssen Mittel eingesetzt werden, die es ermöglichen, eine etwa konstante Abtastentfernung einzuhalten, um ein Überschreiten der maximalen Arbeitsweite des Laserstrahls zu verhindern.

Beim Einsatz einer Ultraschall-Ortungsvorrichtung sind die beschriebenen Auswerteverfahren abhängig von der Güte der Bezugsgröße. Für die Auswertung und eine Generierung vom Steuersignalen für eine automatischen Lenkung, müssen die Echos anhand einer Bezugsgröße bewertbar sein. Es hat sich aber gezeigt, daß gerade dieses Bezugsgröße keine Konstante ist und entlang einer Kante variiert werden müßte. Die Ortungsvorrichtung liefert daher nur stückweise und unter hohem Körrekturaufwand für die Erkennung einer Kante befriedigende Ergebnisse. Für den Einsatz der Vorrichtung an andersartigen. Bearbeitungsgrenzen liegt keine Eignung vor.

In der deutschen Patentschrift 195 08 941 wird eine weitere Ortungsvorrichtung geoffenbart, bei der an einer Landmaschine drei Teilortungsvorrichtungen angeordnet sind, von denen eine erste auf das abgeerntete Feld, eine zweite auf das nicht abgeerntete Feld und eine dritte auf die Erntegutkante gerichtet ist. Die Bezugsgröße für die dritte Teilortungsvorrichtung wird aus dem Mittelwert der Ortungssignale der ersten und zweiten Teilortungsvorrichtung hergeleitet.
Nachteilig wirkt sich auch hier aus, daß das Echo der Teilortungssignale stark variiert und somit keine befriedigende Kantenverfolgung ermöglicht wird. Auf die Teilortungsechos wirken die Bestandsdichte, Abtastentfernung und Bestands- bzw. Stoppelhöhe ein.
Eine notwendige Integration und Mittelwertbildung über mehrerer Messungen macht es aber unmöglich auf schnelle Änderungen des Echos, die sogar entgegengesetzt auftreten können, so zu reagieren, daß eine sichere Kantenerkennung und -verfolgung möglich wird. Die dreifache Ausführung der Ortungsvorrichtung ist fernersehr kostenintensiv und bedarf einer besonderen Synchronisation der Sendesignale.
Für die Ortung von Erntegutschwaden ist diese Vorrichtung ungeeignet. Die von den äußeren Teilortungsvorrichtungen ermittelten Bezugsgrößen stellen die benötigten Bezugsgrößen nicht dar. Die mittlere Teilortungsvorrichtung muß über einem Schwad so ausgerichtet werden, daß die Keulenmitte auf der Schwadmitte liegt. Diese Ausrichtung ist zwar möglich, doch kann von der Vorrichtung in der Schwadmitte kein Kantensignal generiert werden. Eine Änderung des Echos der mittleren Teilortungsvorrichtung findet erst nach dem Verlassen der Ortungskeule vom Erntegutschwad statt.
Für eine Erkennung einer Pflugfurche müßte eine Teilortungsvorrichtung eine Bezugsgröße von der Furchensohle ermitteln. Dies ist aber, durch die Ultraschallkeulenbreite, nicht möglich.

Aus der DD 264 366 ist eine weitere berührungslos arbeitende Ortungsvorrichtung bekannt geworden, die über der Kante angeordnet ist und remittierte optische Strahlung in ein elektrisches positionsbezogenes Signal umwandelt. Die zwischengespeicherten Werte werden dann in einem Informationssystem nach Farb- oder Graustufen ausgewertet und in ein Lenksignal umgewandelt. Ein optisches System nach dieser Auswerteart hat prinzipiell den Nachteil, daß durch verschiedene Belichtungsrichtungen Schatten entstehen, die nur schwer von einer Kante unterschieden werden können. Weiter wirkt sich die Anordnung/Anbauort durch die geringe Vorauseilung negativ auf den Lenkregelkreis aus.

Eine Eignung der Vorrichtung zur Erkennung von verschiedenen Kanten und Bearbeitungsgrenzen ist nicht gegeben. Vielfach ist der Farbunterschied zwischen bearbeitetem und unbearbeitetem Feldstück sehr gering.
Ferner wird die Genauigkeit der Vorrichtung durch die Anzahl und Größe der Empfangselemente bestimmt und bewirken bei einer ausreichenden Auflösung hohe Kosten.

Eine weitere Vorrichtung ist aus der deutschen Patentschrift 197 26 917 bekannt geworden. Dort wird eine Scaneinrichtung zur Erkennung von sich über den Boden erstreckenden Konturen offenbart. Ein an einer Erntemaschine angebauter Laserscanner tastet die Kontur vor einer Erntemaschine durch eine Entfernungsmessung ab. Aus den Konturen werden Entfernungssprungstellen ermittelt und einem Scanwinkel zugeordnet. An der Stelle des größten Entfernungssprungs wird in Verbindung mit dem dazugehörigen Scanwinkel ein Lenkdifferenz ermittelt und einer automatischen Lenkung zugeführt.
Für den Einsatz der Vorrichtung entlang eines Schwades wird aus den Meßwerten der Wert mit der Kleinsten Entfernung als Leitgröße ausgewählt. Diese Vorrichtung eignet sich aber nur zur Erkennung von Bearbeitungsgrenzen, die eine Änderung im Höhenprofil aufweisen. An Bearbeitungsgrenzen, die diese Änderungen nicht besitzen, wie beispielsweise an Lagerstellen im Getreidebestand oder an Bodenbearbeitungsgrenzen versagt diese Vorrichtung.

Es ist daher Aufgabe der Erfindung eine Vorrichtung und Verfahren zu schaffen, die aus verschiedenartigen Konturen eine sichere Erkennung der Bearbeitungsgrenze, unter der im Folgenden eine Grenze zwischen einem bearbeiteten und der sich anschließenden unbearbeiteten Bearbeitungsfläche wie beispielsweise eine Getreidekante, Stoppelfeld/frisch aufgelokkerter Boden, Anwelkgut/ Grasnarbe oder eine Mahdkante verstanden werden soll, oder Leitgröße, unter der im Folgenden eine Spur, die sich von dem umliegenden Feldkontur durch eine Erhöhung, beispielsweise ein Schwad oder eine Vertiefung, beispielsweise eine Furche verstanden werden soll, ermöglicht.
Die Aufbage wird durch die Merkmale des Anspruchs 1 gelöst.

Aus der Reflexion des Sendestrahls als bearbeitungsgrenzenspezifischen Größe die Intensität beziehungsweise die Phasenverschiebung ermittelt. Anhand dieser Reflexionsauswertung ist es nun möglich auch Bearbeitungsgrenzen oder Leitgrößen, die nur einen geringen oder keinen Höhenversatz aufweisen, sicher zu erkennen.

Entfernungssprünge werden durch Höhenunterschiede in derKontur hervorgerufen. Ein Sprungwert in der bearbeitungsgrenzenspezifischen Größe, unter welcher die Intensität beziehungsweise die Phasenlage verstanden werden kann, wird in den meisten Fällen durch ein Feuchtigkeits- beziehungsweise Strukturunterschied zwischen dem bearbeiteten Feldstück und dem unbearbeiteten Feldstück erzeugt. Bei der Bearbeitung eines Feldstückes tritt an der Bearbeitungsgrenze in der Regel mindestens eine Änderung in einer dieser Meßgrößen auf.
So haben Messungen ergeben, daß sich die von einem bearbeiteten Feldstück, wie beispielsweise Stoppeln, Grasnarbe oder frisch aufgelockertem Boden reflektierten, elektromagnetischen Welle von der von einem unbearbeiteten Feldstück reflektierten, elektromagnetischen Welle unterscheidet. Die zusätzliche Ermittlung einer bearbeitungsgrenzenspezifischen Größe bringt dadurch, gegenüber einer einfachen Entfernungsmessung, einen enormem Vorteil. Denn es stehen für die Ermittlung einer Bearbeitungsgrenze oder Leitgröße aus mehreren Meßgrößen mindestens eine Bearbeitungsgrenzen- oder Leitgrößeninformation zur Verfügung.
Für den Fall, daß bei der Auswertung der Entfernungswerten kein brauchbares Signal ermittelbar ist, wie zum Beispiel bei Lagerstellen in einem Getreidebestand, kann zumindest aus der bearbeitungsgrenzenspezifischen Größe eine Bearbeitungsgrenze oder Leitgröße ermittelt werden. Dieses gilt natürlich auch für die umgekehrte Konstellation.

Die erfindungsgemäße Vorrichtung zum Erkennen von Bearbeitungsgrenzen oder Leitgrößen ist einen universelle Einrichtung und eignet sich für die Erkennung unterschiedlicher Bearbeitungsgrenzen und Leitgrößen.
Eine von einer Sendereinrichtung ausgesendete elektromagnetische Welle wird bei dem Auftreffen auf einen Gegenstand reflektiert. Diese reflektierte Welle enthält mehrere Informationen über den reflektierenden Gegenstand. Zum einen läßt sich über die Laufzeit des Signals die Entfernung des Meßpunktes und zum anderen die Intensität beziehungsweise die Phasenverschiebung ermitteln. Erfindungsgemäß werden aus der reflektierten Welle diese Informationen ausgewertet und zur Erkennung einer Bearbeitungsgrenze oder Leitgröße herangezogen.

Ein einfacher Aufbau der Vorrichtung wird durch eine Array-Anordnung der Empfangseinheit erreicht. Die von mindestens einem Infrarot- oder Lichtsender gesendete, elektromagnetische Welle wird von einem Meßpunkt reflektiert und von mehreren waagerecht nebeneinander angeordneten Empfängern empfangen. Die Empfangseinrichtungen sind miteinander so gekoppelt, daß aus den einzelnen Meßwerten die relative Lage der Bearbeitungsgrenze oder Leitgröße zu dem Arbeitsgeräte ermittelt werden kann. Die Genauigkeit dieser Vorrichtung wird durch die Anordnung der Empfangseinrichtungen bestimmt. Daher kann es füreine bessere Auflösung von Vorteil sein, die Empfangseinrichtungen in einem Gehäuse zusammenzufassen.

Eine Reduzierung der Empfangseinrichtungen auf eine Einrichtung wird durch eine Scaneinrichtung erreicht. Dabei wird ein Sendestrahl über einen Schwenkwinkel bis zu 180° um eine annähernd vertikale Achse verschwenkt. Wobei eine vorteilhafte Anbringung der Vorrichtung so gewählt wird, daß der Sendestrahl in der Schwenkbereichsmitte auf einer parallel zur Fahrzeuglängsachse liegenden Achse verläuft. Die Empfangseinrichtung wird dann synchron zum Sendestrahl gesteuert oder durch geeignete Mittel, beispielsweise durch eine aktive Schwenkoptik oder über optische Linsen, dem Empfangsstrahl angepaßt.
In der Regel ist man bemüht, gerade verlaufende Bearbeitungsgrenzen zu erhalten. Die Bearbeitungsgrenze oder Leitgröße wird daher immer innerhalb eines geringen Schwenkbereichs der Vorrichtung zu detektieren sein. Eine vorteilhafte Ausgestaltung der Erfindung ist deshalb in einem auf wenige Grad, beispielsweise +/-6° um die Schwenkbereichsmitte, reduzierten Schwenkbereich zu sehen. Ein weiterer Vorteil ergibt sich dadurch, daß mit einer höheren Scanrate gearbeitet werden kann, wodurch sich die Auflösung hintereinanderfolgender Konturen verbessert.

Die Einsatzgebiete der Vorrichtung sind verschiedene Arbeitsgeräte oder Erntemaschinen mit unterschiedlichen Bearbeitungsabläufen. Daher ist es vorgesehen die Vorrichtung mit verschiedenen Berechnungsverfahren zur Generierung von Bearbeitungskanten oder Leitgrößen auszustatten. Der Bediener der Vorrichtung wählt über eine manuelle Eingabeschnittstelle, beispielsweise über einen Tastatur, einen Drehschalter oder Taster, die gewünschte Vorrichtungsanwendung aus. Das benötigte Berechnungsverfahren wird dann entsprechend in der Vorrichtung angewählt. Desgleichen kann der Bediener der Vorrichtung über bekannte Mittel mitteilen, daß das Berechnungsverfahren automatisch neu ausgewählt werden soll.
In einer weiteren Ausbaustufe der Erfindung ist es vorgesehen, daß die Auswahl des Berechnungsverfahren zyklisch oder durch eine von dem Bearbeitungsprozeß abhängige Größe gesteuert ausgewählt wird. Es ist beispielsweise denkbar mit dem Absenken des Schneidwerkes oder mit dem Einschalten einer Zapfwelle ein Auswahlverfahren zu aktivieren.

Die Vorrichtung liefert im einfachsten Anwendungsfall die relative Bearbeitungsgrenzen- oder Leitgrößenlage zur dem Vorrichtungsanbringungsort an der Maschine. Die Vorrichtung wird so an einer landwirtschaftlichen Arbeits- oder Emtemaschine angebracht, daß der Sendestrahl die Leitlinie oder Bearbeitungsgrenze dem Arbeitsgerät voraus erfaßt. Eine vorteilhafte Anbringung wird durch eine Ausrichtung der Meßbereichsmitte parallel zur Fahrtrichtung erreicht. Die Vorrichtungsarbeitsbereichsmitte wird in der Regel als Solleitgröße ausgewählt. Der beste Anbringungsort ist daher eine Anbringung der Vorrichtung direkt senkrecht über der Bearbeitungsgrenze oder Leitgröße. Dadurch wir ein Entfernungssprung oder Sprung der bearbeitungsgrenzenspezifischen. Größe in dem Bereich der Solleitrichtung am besten erkannt. Femer können Abweichungen von der Sollrichtung nach beiden Seiten hin in gleichem Maße erkannt werden. In einigen Anwendungsfällen beispielsweise bei Arbeitsgeräten mit großer Arbeitsbreiten und wechselnden Bearbeitungsrichtungen ist diese optimale Anbringung nicht immer möglich. Weitauslegende Haltegestänge würden für eine notwendige, annähernd, schwingungsfreie Anbringung oberhalb der Bearbeitungskante oder Leitgröße der Vorrichtung einen hohen konstruktiven Aufwand erfordern.
Die Anbringung der Vorrichtung wird daher von der Bearbeitungsgrenze oder Leitgröße beabstandet an dem Arbeitsgerät oder der Zugmaschine angebracht. Die Vorrichtungsarbeitsbereichsmitte und die Bearbeitungsgerätekante oder eine Spuranreißerfurche sind dann, bei paralleler Ausrichtung des Sendestrahls, voneinander beabstandet. Damit die Arbeitsmaschine der Bearbeitungsgrenze oder Leitgröße mit entsprechendem Abstand folgt, muß die ermittelte Bearbeitungsgrenzenlage mit einem Offset korrigiert werden und erst dann einer automatischen Lenkung zugeführt werden.

Beim Arbeiten in einer Hanglage stellen sich die Zug- und Arbeitsgeräte bekanntlich zur Kompensation der Hangabtriebskräfte etwas quer zum Hang hin. Die Arbeitsmaschine dreht sich dazu um ihrem Maschinenschwerpunkt ohne dabei die Fahrtrichtung zu verändem. Alle von dem Schwerpunkt beabstandeten Maschinenteile verändern ihre relative Lage zur Fahrtrichtung. Die Vorrichtungsanbringung ist in der Regel beabstandet von dem Maschinenschwerpunkt angebracht. Auch der Abstand der Meßbereichsmitte ist jetzt nicht mehr parallel zur Fahrtrichtung. Von der Vorrichtung wird eine Regeldifferenz ermittelt. Eine Korrektur des Sollwertes beziehungsweise des Istwertes durch einen von Hand eingegeben Offset gleicht diese Regeldifferenz aus.
Regeldifferenzen die durch eine relative Anbringungspositionsänderung hervorgerufen werden lassen sich auch durch eine weitere Ausgestaltung der Erfindung beheben. So ist es vorgesehen die Anbringungsposition und/oder Neigung manuell oder automatisch zu verändern.
Die Vorrichtungsanbringung kann über bekannte Mittel wie beispielsweise einen Stellmotor in ihrer Lage beziehungsweise Neigung so verändert werden, daß die Regeldifferenzen ausgeglichen werden.
Weiter wird es notwendig die Vorrichtungsanbringung direkt an Arbeitsgeräten mit unterschiedliche Arbeitshöhen bzw. -tiefen zu verändern. Damit die Vorausschau der Vorrichtung etwa eingehalten oder zumindest verhindert wird, daß der Abtaststrahl in Arbeitsstellung das Bearbeitungsfeld verläßt, kann es notwendig werden die Anbauhöhe oderdie Neigung der Vorrichtung zu korrigieren. Dies kann automatisch durch eine Steuerung nach einer Arbeitshöhen bzw. -tiefenmessung oder per Handeinstellung erfolgen.
Eine Veränderung der horizontalen Position ist beim Einsatz der Vorrichtung in Verbindung eines Bodenbearbeitungsgeräten dann sinnvoll, wenn eine veränderte Überlappung zur vorherigen Bearbeitungsspur erwünscht ist. Die Vorrichtung wird dazu beispielsweise mit einem Stellmotor dichter an den Zugmaschinenmittelpunktverschoben. Die Solleitgröße wird dadurch verschoben und die automatische Lenkung bewirkt, daß die Maschine mit veränderter relativen Solleitgröße zur Bearbeitungsgrenze oder Leitgroße entlang geführt wird.

Eine weitere Ausgestaltung der Erfindung wird durch die Einbeziehung der Vorrichtung in ein Feldende- beziehungsweise anfangsprogramm erreicht. Aus den ermittelten Bearbeitungsgrenzenverläufen oder Leitgrößen wird der Anfang oder das Ende einer Bearbeitungsgrenze beziehungsweise Leitgröße abgeleitet und entsprechend einer Automatik überbekannte Kommunikationsmittel übertragen.
Eine Feldanfangsautomatik wird dann aktiviert, wenn die Vorrichtung eine Bearbeitungsgrenze oder Leitgröße erkennt. Dem Fahrer wird dies mitgeteilt und nach Verlauf einer Zeit oder Fahrstrecke die Automatik gestartet. Beispielsweise wird das Arbeitgerät abgesenkt und die Zapfwelle eingeschaltet.

In einer weiteren Ausgestaltung der Erfindung ist es vorgesehen, die einzelnen Meßgrößen In Verbindung mit einer relativen oder absoluten Position in vorhandenen Speichermittel abzuspeichern. Die heute vorhandenen, hochpräzisen GPS-Ortungssysteme erlauben es die jeweiligen Reflexionsmeßwerte in Verbindung mit einer Anbaupositonskorrektur und einer absoluten Position (X,Y, eventuell Z- Koordinaten) zugeordnet abzuspeichern. In einer vereinfachten Form genügt es, die Meßgrößen in Verbindung mit einer relativen Größe, wie beispielsweise dem Scanwinkel oder bei einer Array- Empfangseinrichtungsanordnung die Empfangseinrichtungsnummer- oder position, abzuspeichern.

Die Kommunikation der Vorrichtung mit weiterer Auswerteelektronik, dem automatischen Lenkregler oder der Feldende- beziehungsweise anfang kann über bekannte Kommunikationsmittel wie beispielsweise über eine bekannte CAN-Bus-Verbindung erfolgen.

Eine ausgesendete elektromagnetische Welle wird von einem Konturpunkt reflektiert und von der Vorrichtung empfangen. Aus dem empfangenen Signalen wird die Entfernung und mindestens eine bearbeitungsgrenzenspezifische Größe ermittelt und abgespeichert. Aus den einzelnen Meßgrößen Werden die Meßwerte über eine Vorrichtungsarbeitsbreite ausgewählt und daraus eine Kontur berechnet. Diese einzelnen Konturen können je nach Bedarf erneut zwischengespeichert werden. Anhand eines ausgewählten Auswerteverfahrens werden die einzelnen Konturen oder Meßreihen untersucht und die Lage der Bearbeitungsgrenze oder Leitgröße generiert. Aus dem Vergleich der Soll-Position mit der ermittelten Ist-Position wird eine Regeldifferenz ermittelt und eine Stellgrößefür eine nachgeschaltete, automatische Lenkung abgeleitet. Das Verfahren ermittelt sicher eine Bearbeitungsgrenze oder Leitgröße und ermöglicht, daß eine Arbeitsmaschine sicher entlang einer Bearbeitungsgrenze oder Leitgröße geführt werden kann.

In einer weiteren Ausgestaltung des Verfahrens ist es vorgesehen, daß bei der Auswertung der Meßgröße keine absolute Bezugsgröße verwendet, sondern mindestens eine Meßgröße als Bezugsgröße ausgewählt und zur Auswertung genutzt wird. Bei der Normierung der Meßwerte einer Meßgröße wird beispielsweise der kleinste Entfernungswert als Eins und der größte Entfernungswert als Null angenommen. Durch diese Normierung werden alle Höhenkonturänderungen auf einen Sprungbereich von 0-1 normiert. Der tatsächliche Höhensprung spielt keine Rolle mehr und die nachfolgende Auswertung bedarf keiner weiteren Anpassung. Entfernungsänderungen durch eine Nickbewegung beziehungsweise eine Berg- oder Talfahrt der Arbeitsmaschine werden durch die Normierung eliminiert.
Eine andere Normierung kann beispielsweise für die Normierung der bearbeitungsgrenzenspezifische Größe eingesetztwerden. Hierbei werden die Meßwerte einer Meßgröße auf eine Bezugsgröße bei einem bestimmten Scanwinkel normiert Als Beispiel sei genannt eine Normierung der Meßwerte über eine Vorrichtungsarbeitsbreite auf den äußersten linken Meßwert. Beim Abernten eines Getreidefeldstückes im Uhrzeigersinn würde dies bedeuten, daß alle Meßwerte auf einen Meßwert, der aus der Reflexion einer elektromagnetischen Welle an einem Stoppelfeldstück stammt, normiert würden. Durch diese Verfahren werden Schwankungen in beispielsweise einer bearbeitungsgrenzenspezifischen Größe entlang einer Bearbeitungsgrenze oder Leitgröße eliminiert.
Sollten starke unreelle Schwankungen in der Bezugsgröße auftreten, ist es vorgesehen, daß eine Plausibilitätsprüfung vorgenommen und bei Bedarf eine Bezugsgröße gemittelt, verworfen und gegen eine Vorhergehende ausgetauscht wird.

Die Einsatzgebiete der Vorrichtung sind verschiedene Bearbeitungsgrenzen oder Leitgrößen. Daher muß die Vorrichtung verschiedene Auswerteverfahren beinhalten. Diese Verfahren können wie schon erwähnt manuell oder automatisch ausgewählt werden. Für die automatische Auswahl eines Auswerteverfahrens werden die Meßwerte nach einer bestimmten Meßwertezuordnung untersucht. Beispielhaft sei im Folgenden ein Auswahlverfahren beschrieben.
Zuerstwerden nur Meßwerte einer Meßgröße überelne Vorrichtungsarbeitsbreite nach dem größten beziehungsweise kleinsten Meßwert und dessen relativen Position abgesucht und Fundstellen gespeichert. Des weiteren werden die Meßgrößen einer Vorrichtungsarbeitsbreite nach dem größten Meßwertsprung und ihre dazugehörigen relativen Position untersucht. Dabei kann in einer weiteren Ausgestaltung des Verfahrens nur nach Sprungstellen mit bestimmten Vorzeichen gesucht werden.
Findet das Auswahlverfahren in der Entfernungsmessung in nur einem Bereich einen maximalen beziehungsweise minimalen Wert, handelt es sich um eine Bearbeitungsgrenze oder Leitgröße mit einer Vertiefung beziehungsweise Erhöhung in der Kontur. Es kann dann davon ausgegangen werden, daß es sich um eine Furche, Spuranreißerspur oder um ein Schwad handelt. Ist über eine Vorrichtungsarbeitsbreite nur ein Bereich mit minimalen Werten ermittelbar, handelt es sich bei der erkannten Bearbeitungsgrenze oder Leitgröße um einen vom Boden beabstandete Leitgröße wie beispielsweise um einen Schwad.

Ist über eine Vorrichtungsarbeitsbreite nur ein Bereich mit maximalen Werten ermittelbar, handelt es sich bei der erkannten Bearbeitungsgrenze oder Leitgröße um einen Bodeneinschnitt wie beispielsweise um eine Spuranreißerspur oder Furche.
Als nächstes wird die Position des größten Meßwertes mit der Position des größten Meßwertsprunges, mit eventueller Vorzeicherrauswahl, verglichen. Liegen diese dicht zusammen, handelt es sich um eine Furche. Läßt sich aus den Meßwerten einer Meßgröße kein Bereich innerhalb einer Vorrichtungsarbeitsbreite mit minimalen beziehungsweise maximalen Werten aber ein Entfernungssprung ermittelt, so handelt es sich um eine Bearbeitungskante.

Konnte aus den Entfernungswerten keine eindeutige Bearbeitungsgrenze oder Leitgröße ermittelt werden, so gibt die Auswertung der bearbeitungsgrenzenspezifischen Größe eine weitere Auswahlhilfe. In anschließenden Verlahrensschritten werden die bearbeitungsgrenzenspezifischen Größen nach minimalen beziehungsweise maximalen Werten und Sprungstellen mit eventueller Vorzeichenauswahl innerhalb einer Vorrichtungsarbeitsbreiteuntersucht. Werden hier entsprechende Stellen gefunden, werden diese mit den vorherigen Verfahrensauswahlskriterien verglichen.
Ist über eine Vorrichtungsarbeitsbreite nur ein Bereich mit minimalen beziehungsweise maximalen Werten ermittelbar, liegt an dieser Stelle eine veränderte Obenflächenstruktur und/oder eine Feuchtigkeitsänderung vor. Es handelt sich dann an dieser Stelle beispielsweise um eine Spuranreißerspur, eine Furche oder einen Schwad. Nimmt man dann die Entscheidungskriterien aus der Entfernungsmessung hinzu, kann eine eindeutige Auswerteverfahrensauswahl durchgeführt werden. Wird kein minimaler oder maximaler Wert in einem Bereich der Vorrichtungsarbeitsbreite aber ein Größensprung ermittelt, so liegt an dieser Stelle eine Bearbeitungsgrenze beispielsweise Getreidekante oder eine Kante Anwelkgut/ Grasstoppeln vor. Ergab die Entfernungsermittlung an dieser Stelle auch eine Sprungstelle so liegt an dieser Stelle eine Bearbeitungsgrenze in Form einer Kante, wie beispielsweise eine Getreidekante oder eine Furche, vor.
Konnte aus der Entfernungsermittlung an dieser Stelle keine Sprungstelle ermittelt werden, findet an der Bearbeitungsgrenze kein Höhenkontursprung statt.

Die zur Auswahl eines Auswerteverfahrens verwendeten Auswahlkriterien werden auch zur Erkennung der Ist-Position der Bearbeitungsgrenze oder Leitgröße verwendet. Anhand des gewählten Auswerteverfahrens kann dann die Ist-Position der bekannten Bearbeitungsgrenze oder Leitgröße schon aus nur einer Untersuchung einer Meßgröße abgeleitet werden. Beispielsweise kann das Auswerteverfahren zur Erkennung einer Bearbeitungskante, eine Kante schon aus der Sprungstelle in der Entfernungsmessung ermittelt werden. Dieses Ergebnis wird hier durch die Ermittlung einerweiteren in der Regel in der bearbeitungsgrenzenspezifischen Größe vorhandenen Sprungstelle bestätigt. Kann aus einer Meßgröße keine Ist-Position ermittelt werden, wird auf das weitere im Auswahlverfahren benutzte Kriterium zurückgegriffen.
Eine Ausgestaltung der Verfahren ist darin zu sehen, daß wenn aus mehreren Meßgrößenuntersuchungen mehrere Ist-Position ermittelt werden, diese miteinander verglichen und gegebenenfalls miteinander verrechnet oder anhand von Plausibilitätsuntersuchungen ein Ergebnis ausgewählt wird. Um eine noch höhere Sicherheit zu erhalten, ist es vorgesehen auch vorherige Ist-Positionen mit dem aktuellen Ergebnis zu vergleichen und gegebenenfalls dieses zu korrigieren. Vorteilhaft ergibt sich dann eine Ermittlung des Kantenvertaufs aus mehreren gespeicherten Vorrichtungsarbeitsbreitenkonturen. Sie erlauben dann auch eine Vorhersage über die wahrscheinlich folgende Kantenlage.

In einer weiteren Ausgestaltung des Verfahrens wird aus den Meßwerten ein Ende beziehungsweise der Anfang der Bearbeitungsgrenze oder Leitgröße generiert.
Kann das Auswerteverfahren keine ist-Position der Bearbeitungsgrenze oder Leitgröße mehr ermitteln, ist die Arbeitsmaschine am Bearbeitungsfeldende angekommen. Durch die Vorausschau der Vorrichtung wird das Feldende schon vor dem Erreichen des Arbeitsgerätes erkannt. Da bis zum Erreichen des Feldendes weiter gearbeitet werden muß, wird die automatische Lenkung mit einem gehaltenen Lenksignal bis zum Feldende weitergelenkt. Über ein Zeitglied oder eine Fahrstreckenmessung oder ein Aktivierungsstellbefehl (zum Beispiel eine Lenkraddrehung) wird dann am Ende des Bearbeitungsstreifens eine Feldendeautomatik aktiviert. Um mögliche Fehlentscheidungen der Feldendeerkennung auszuschließen, wird dem Fahrer eine Feldendeerkennung mitgeteilt. Er hat dann bis zum Erreichen des Feldendes die Möglichkeit die Automatik zu deaktivieren. Die Feldendeautomatik setzt verschiedene Maschinenabläufe automatisch in Gang. Beispielsweise wird das Bearbeitungsgerät ausgehoben und nach einer gewissen Zeit die Zapfwelle abgeschaltet.

Wird von der Vorrichtung eine Bearbeitungsgrenze oder Leitgröße nach dern ausgewählten Auswerteverfahren erkannt, wird eine Feldanfangsautomatik aktiviert. Der Bediener der Arbeitsmaschine bekommt dieses mitgeteilt. Durch die Vorausschau der Vorrichtung wird die Bearbeitungsgrenze oder Leitgröße schon vor dem Erreichen der Maschine am Feldanfang erkannt. Die automatische Lenkung kann dann sofort gegebenenfalls automatisch eingeschaltet werden. Bis dann die Arbeitsmaschine den Feldanfang erreicht, kann die Feldanfangsautomatik bestimmte Maschineneinstellungen vornehmen. Der Maschinenbediener hat auch die Möglichkeit in dieser Zeit die Autornatik zu deaktivieren. Für den richtigen Feldanfangsablauf, kann eine weg-, zeit-, oder funktionsabhängige Steuerung notwendig sein.

Die aus den Meßwerten ermittelte Ist-Position einer Bearbeitungsgrenze oder Leitgröße wird dann zur automatischen Lenkung eines Bearbeitungsgerätes oder einer Erntemaschine entlang einer Bearbeitungsgrenze oder Leitgröße verwendet.
Die generierte Ist-Position wird mit einer Solleitgröße verglichen und daraus eine Regeldifferenz abgeleitet. Durch ein weiteres Verfahren kann dann die Ist-Position, die Soll-Position oder die Regeldifferenz durch die Einbeziehung eines Offsets korrigiert werden. Dieses wird notwendig, damit Einflüsse von einem Hangabdrift der Arbeitsmaschine, dem Vorrichtungsanbringungsort oder einer Arbeitsbreitenanderung, aus der ermittelten Ist-Position eliminiertwerden können. In dem Verfahren wird die Größe des Offsets durch eine manuelle Vorgabe oder durch eine automatische Ermittlung von Parametern ermittelt und bei der Ermittlung der Stellgröße für die automatischen Lenkung berücksichtigt.

In der Regel nimmt die Intensität der Reflexion mit zunehmender Entfernung ab. Eine Zunahme ist bei zunehmender Feuchtigkeit zu registrieren. Die Reflexionsintensität eines frisch bearbeiteten Feldstücks oder einem frisch gezogenen Spur ist daher höher als das umliegende unbearbeitete Feldstück. An Bearbeitungsgrenzen, an der die bearbeitungsgrenzenspezifische Größe und die Entfernung proportional zueinander ist, z.B.: Spuranreißerspur, wird die Vorrichtungsausrichtung nach einem Verfahren so gesteuert oder geregelt, daß die Anbringungsposition oder Neigung der Vorrichtung derart verändert wird, daß mindestens eine ermittelte Meßgröße annähernd konstant gehalten wird. Durch diese Maßnahme wird mindestens ein Bearbeitungsgrenzenmerkmal so verstärkt, daß eine bessere Erkennung der Bearbeitungsgrenze oder Leitgröße gewährleistet wird.

In einem weiteren Verfahren werden die ermittelten Entfernungswerten und die dazugehörigen bearbeitungsgrenzenspezifischen Größen einer absoluten beziehungsweise einer relativen Position zugeordnet und abgespeichert. Mit Hilfe diesen Verfahrens ist es möglich, den bei der Bearbeitung eines Feldstücks gefolgten Bearbeitungsgrenzen oder Leitgrößen auf einer Karte darzustellen. Anhand dieser Aufzeichnungen kann dann die tatsächliche Arbeitsbreite des Arbeitsgerätes, der tatsächliche Schlaggrenzverlauf oder eine Leitgröße für Folgearbeitsgänge ermittelt werden.

Weitere Ausgestaltungen der Erfindung sind ableitbar und dem Fachmann ohne besondere fachnotorische Kenntnisse ersichtlich. Sie bedürfen daher keiner besonderen Erläuterung.

Die Erfindung wird nun anhand von Beispielen die nicht alle Merkmale des Anspruchs 1 enthalten, weiter erläutert.

- Fig. 1: zeigt die bearbeitungsgrenzenspezifischen Meßwerte senkrecht zu einer Pflugfurche;
- Fig. 2: zeigt eine landwirtschaftliche Zugmaschine in der Draufsicht, mit angebautem Pflug, beim Onland-Pflügen und über der Pflugfurche angebrachter erfindungsgemäßen Vorrichtung;
- Fig. 3: zeigt die bearbeitungsgrenzenspezifischen Meßwerte senkrecht zu einer Mahdkante;
- Fig. 4.: zeigt eine landwirtschaftliche Emtemaschine in der Draufsicht, mit angebautem Schneidwerk und über der Mahdkante angebrachter erfindungsgemäßen Vorrichtung;
- Fig. 5: zeigt über den Schwenkwinkel aufgetragene einzelne Meßpunkte der Vorrichtung an einer Getreidekante;
- Fig. 6: zeigt verschiedene, über die Schwenkbreite der Vorrichtung aufgetragene Meßergebnisse einer Spuranreißerspur.

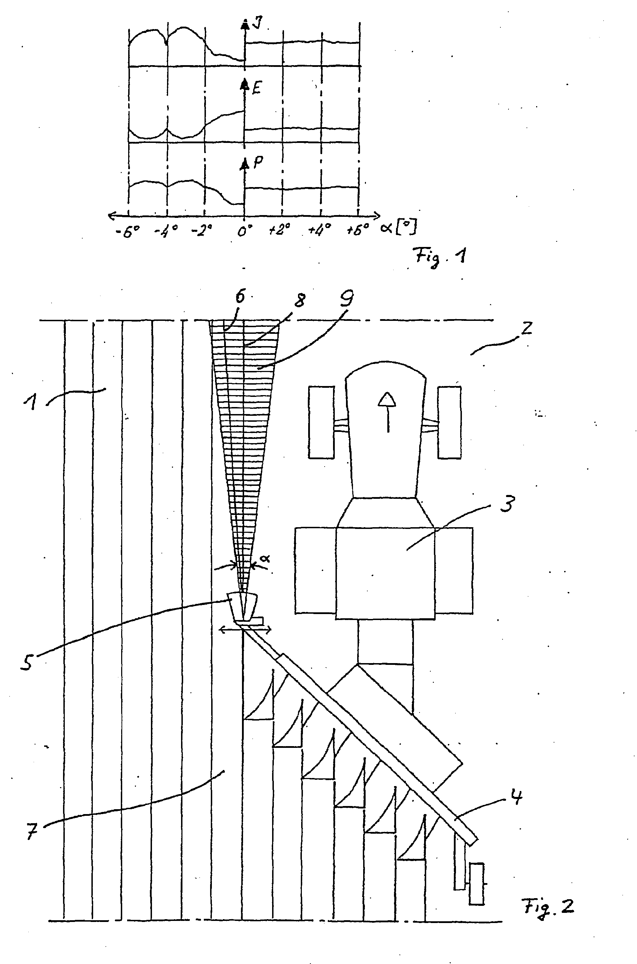

Figur 1 zeigt Diagramme mit bearbeitungsgrenzenspezifischen Meßwerten einer Pflugfurche. Wie in Figur 2 dargestellt, wird eine erfindungsgemäße Vorrichtung 5 oberhalb einer Furche an einem Bearbeitungsgerät, hier ein Pflug 4, angebaut. Die Vorrichtung 5 arbeitet mit einem Laserstrahl der über einen Schwenkwinkel α von +/- 6° zur Fahrtrichtung verschwenkt wird. In dem unteren Liniendiagramm der Figur 1 wird das Profil ( Achsenbezeichnung P ) einer Furche dargestellt. Im Bereich von -6° bis -2° sieht man den Schnitt durch das bearbeitete Feldstück 1. Von -2° bis 0° wird die Vertiefung in dem Feldprofil durch eine Furche angezeigt. Der sich anschließende Feldteil von 0° bis 6° stellt das etwas tieferliegende unbearbeitete Feldstück 2 dar.
In dem darüberliegenden Diagramm in Figur 1 wird schematisch das dazugehörende Entfernungsmessergebnis E der Vorrichtung 5 angezeigt. Durch die Anbringungsposition an der Arbeitsmaschine wirken sich Erhebungen in dem Profil P als Entfernungsverkürzungen aus. Dle Darstellung der Intensität I in dem darüberliegenden Diagramm In Figur 1 verhält sich etwa invers zum Entfernungsmessdiagramm E. Die Intensität I der Reflexion des Laserstrahls ist an dem bearbeiteten Feldstück 1 höher als auf dem unbearbeitete Feldstück 2.
Für die Auswertung der Werte ist nur die Stelle interessant, an welcher der größte Sprung auftritt. Deshalb sind die Meßwerte einer Vorrichtungsarbeitsbreite auf den kleinste Werte als Bezugsgröße normiert und ohne Einheit dargestellt worden. Alle folgenden Messungen können so miteinander verglichen und zur Erkennung der Leitlinie verwendet werden.

Dem Schwenkwinkel α des Laserstrahls 6, bei dem der Laserstrahl 6 und die Fahrtrichtung derMaschine parallel zueinander liegen, wird der Schwenkwinkelwert α=0° zugewiesen. Aus den Diagrammen E und I in Figur 1 ist zu erkennen, daß die erkannte Kante und die zugeordnete Ist-Position direkt bei einem Schwenkwinkel von α=0° liegt. Die Arbeitsmaschine folgt demnach genau der erkannten Leitgröße/Furche. Eine Fahrtrichtungsänderung ist daher nicht notwendig.

In der Figur 2 ist eine Draufsicht auf eine Zugmaschine 3 mit einem angebauten Pflug 4 dargestellt. An dem Pflug 4 ist direkt über der Bearbeitungsgrenze 8 eine Vorrichtung 5 angebaut. Die Vorrichtung 5 sendet eine elektromagnetische Welle in Fahrtrichtung aus. Diese wird in dem Schwenkbereich 9 so verschwenkt, daß dem Schwenkwinkel α=0° die Schwenkbereichsmitte mit einer zur Fahrtrichtung parallelen Achse zugeordnet wird.
Wird in der dargestellten Vorrichtungsanordnung das an der Leitfurche 7 liegende Schar nicht richtig ausgelastet, so kann dies durch ein Verschieben der Vorrichtung 5 in horizontaler Richtung korrigiert werden.
Bei der Verwendung der Vorrichtungs an einem Drehpflug, wird nach der Pflugdrehung die Vorrichtung automatisch auf ihrer Arbeitsposition gebracht.

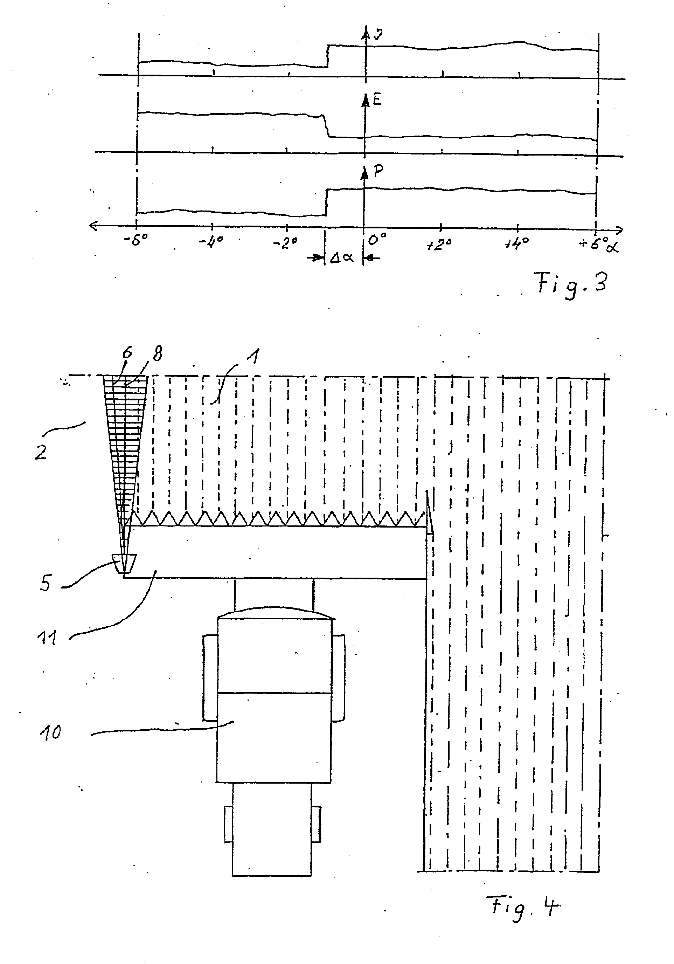

In Figur 3 werden Diagramme ähnlich der Figur 1 dargestellt. Im dem unteren Diagramm wird das Profil P durch eine Mahdkante, bezogen auf einen Schwenkwinkelbereich α einer erfindungsgemäßen Vorrichtung 5, gezeigt. In den darüberliegenden Diagrammen E und I sind die Ergebnisse einer Messung über einen gesamten Schwenkwinkelbereichs dargestellt.
Im Bereich von -6° bis -1 ° wird das abgeerntete Feldstück 2 gezeigt. Der Bereich -1° bis +6° stellt ein stehenden Bestand 1 dar. Das abgeerntete Feldstück wird durch die Entfernungsmessung E durch die größeren Entfernungswerte und der stehende Bestand 2 durch die kürzeren Entfernungswerte erkannt. Bei der Auswertung der Intensität steilen sich die Zusammenhänge genau umgekehrt dar. Das Auswerteverfahren ermittelt die Sprungstellen und ordnet diese einem Schwenkwinkel zu und berechnet die Ist-Position der Bearbeitungsgrenze zur momentanen Fahrtrichtung.
Aus der Figur 3 ist abzuleiten, daß die momentane Fahrtrichtung der Erntemaschine und der Verlauf der Bearbeitungskante um 1° differieren. Folglich muß aus dieser Regelabweichung eine Stellgröße generiert wer den, die es ermöglicht die Arbeitsmaschine 10,2 auf ihrer notwendigen Sollkurs zurückzuführen.

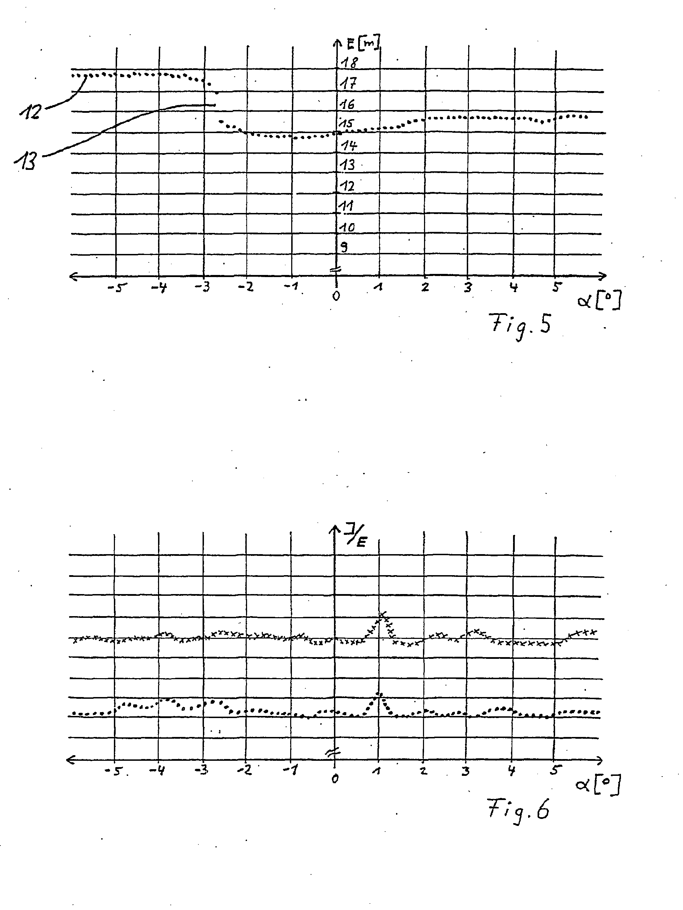

In der Figur 4 wird die Draufsicht auf eine Erntemaschine 10 im Arbeitseinsatz gezeigt. An dem Schneidwerk 11 ist auf der linken Seite eine erfindungsgemäße Vorrichtung 5 angebaut. Die elektromagnetischen Wellen, hier in Form eines Laserstrahls 6, werden in Fahrtrichtung vor dem Schneidwerk 11 über die Bearbeitungsgrenze 8 verschwenkt. Der Anbringungsort der Vorrichtung 5 wird an dem Schneidwerk 11 so gewählt, daß die Vorrichtungsarbeitsbreltenmitte bei einer gewünschten Schneidwerksauslastung genau auf der Bearbeitungsgrenzes liegt.

In Figur 5 wird ein Meßgröße ( hier die Entfernung) durch einzelne Meßwerte 12 dargestellt, bei dem die Enffemungswert E einem Schwenkwinkel α zugeordnet sind. Durch eine Interpolation der Meßwerte 12 erhält man eine Meßkurve über einen Schwenkbereich 9 der Vorrichtung 5. Die Ableitung der Entfernung nach dem Schwenkwinkel gibt dann Aufschluß über die relative Lage des größten Meßwertsprungs beziehungsweise der Bearbeitungsgrenze zur Fahrtrichtung der Erntemaschine. In dieser Figur wird das Entfernungsmessergebnis über einen Schwenkbereichs an einer Mahdkante gezeigt. Die Bearbeitungsgrenzes liegt hier an der Stelle des Meßwertsprungs 13 bei einem Schwenkwinkel von ca. -2,8°.

In der Figur 6 werden in einem Diagramm mehrere Meßwerte über eine Vorrichtungsarbeitsbreite von zwei bearbeitungsgrenzenspezifischen Meßgrößen dargestellt. Es werden zum einen die Entfernung E und zum anderen die Intensität I jedes Meßpunktes über den Schwenkwinkel α dargestellt. Beide Meßkurven zeigen einen ähnlichen, proportionalen Verlauf an. Bei einem Schwenkwinkel von α=1° haben beide Meßkurven ein Maximum. Daraus läßt sich ableiten, daß es sich hier um eine Spuranreißerspur in einem unbearbeiteten Feldstück handelt Durch die Vertiefung in der Spuranreißerspur wird der Entfernungswerts erhöht. An der gleichen Stelle wird aus der Reflexion eine höhere Intensitäts ermittelt. Diese wird durch den in der Regel höheren Feuchtigkeit in der Spuranreißerspur erzeugt. Durch die Kombination der einzelnen Meßgrößen wird es auch bei schwer analysierbaren Kurvenverläufen möglich, eine Leitspur sicher erkennen zu können. Hier weisen zum Beispiel beide Kurven an der gleichen Stelle einen Maximalwert auf.

### Bezugszeichenliste

- 1: bearbeitetes Feldstück
- 2: unbearbeitetes Feldstück
- 3: Zugmaschine
- 4: Pflug
- 5: Vorrichtung
- 6: Laserabtaststrahl
- 7: Furche
- 8: Bearbeitungsgrenze
- 9: Schwenkbereich
- 10: Erntemaschine
- 11: Schneidwerk
- 12: Meßwert
- 13: Meßwertsprung

### Spalte 8:

Ein erfindungsgemäßes Verfahren besteht aus folgenden Verfahrensschritten:
- Aussendung einer elektromagnetischen Welle,
- Empfang der reflektierten, elektromagnetischen Welle und Auswertung nach einer ersten bearbeitungsgrenzenspezifischen Größe und mindestens einer weiteren bearbeitungsgrenzenspezifischen Größe,
- Abspeichern der einzelnen Meßwerte
- Berechnung einzelner Konturen über eine Vorrichtungsarbeitsbreite aus den einzelnen Meßwerten,
- Meßwerte einer Vorrichtungsarbeitsbreite nach ausgewähltem Auswerteverfahren untersuchten,
- Generierung einer Ist-Position der Bearbeitungsgrenze oder Leitgröße,
- Regeldifferenz aus dem Vergleich der Ist-Position/Soll-Position ermitteln und eine Stellgröße für die automatische Lenkung generieren.

## Patentansprüche

1. Vorrichtung zur berührungslosen Erkennung von Bearbeitungsgrenzen oder Leitgrößen zur automatischen Lenkung von landwirtschaftlichen Arbeitsmaschinen (3;10) entlang einer, von einem vorhergehenden, gleichen oder andersartigen Arbeitsgang erzeugten, für den nachfolgenden oder anschließenden Bearbeitungsschritt ausschlaggebenden Leitgröße, wobei die Vorrichtung (5) oberhalb der Bearbeitungsgrenze (7;8) angeordnet ist und aus mindestens einer Sendeeinrichtung, welche elektromagnetische Wellen so aussendet, dass die Bearbeitungsgrenzen (7;8) oder Leitgrößen in Arbeitsrichtung voraus erfasst werden, und mindestens einer Empfangseinrichtung besteht, in welcher Mittel vorhanden sind, die die Entfernung zu einzelnen Wellenreflexionspunkten durch Laufzeitmessung ermittelt,
**dadurch gekennzeichnet,**
**dass** Mittel vorhanden sind, die aus der Reflexion ,einer gesendeten, elektromagnetischen Welle, die Intensität und die Phasenverschiebung ermitteln.

2. Vorrichtung nach Anspruch 1,
**dadurch gekennzeichnet,**
**daß** aus der Wellenreflexion die Intensität als eine bearbeitungsgrenzenspezifische Größe ermittelt wird.

3. Vorrichtung nach Anspruch 1 oder 2,
**dadurch gekennzeichnet,**
**daß** aus der Wellenreflexion die Phasenverschiebung als eine bearbeitungsgrenzenspezifische Größe ermittelt wird.

4. Vorrichtung nach einem oder mehreren derAnsprüche 1 bis 3,
**dadurch gekennzeichnet,**
**daß** mindestens eine Sendeeinrichtung und eine oder mehrere Empfangseinrichtungen in Array-Anordnung verwendet werden.

5. Vorrichtung nach einem oder mehreren der Ansprüche 1 oder 4,
**dadurch gekennzeichnet,**
**daß** die Sende- beziehungsweise Empfangseinrichtung eine Scaneinrichtung ist.

6. Vorrichtung nach einem oder mehreren der Ansprüche 1 bis 5,
**dadurch gekennzeichnet,**
**daß** die Vorrichtungsarbeitsbreite dem Anwendungsfall angepaßt werden kann und nur wenige Scanwinkelgrade, beispielsweise +/- 6° um die Schwenkbereichsmitte, aufweisen kann.

7. Vorrichtung nach einem oder mehreren der Ansprüche 1 bis 6,
**dadurch gekennzeichnet,**
**daß** über geeignete Mittel das Berechnungsverfahren zur Generierung einer Bearbeitungsgrenze beziehungsweise Leitgröße, das der entsprechend vorliegenden Bearbeitungsgrenze (7;8) beziehungsweise Leitgröße angepaßte Verfahren automatisch oder manuell auswählbar ist.

8. Vorrichtung nach einem oder mehreren derAnsprüche 1 bis 7,
**dadurch gekennzeichnet,**
**daß** Mittel vorhanden sind die es ermöglichen, die Position/ Lage der Bearbeitungsgrenze (7;8) beziehungsweise Leitgröße direkt oder korrigiert, mit einem Offset, Vorrichtungsanbringungsort- und/oder Arbeitsbreitenkorrekturwert, einer automatischen Fahrzeuglenkung über bekannte Mittel wie beispielsweise einem Fahrzeugbussystem zuzuführen.

9. Vorrichtung nach einem oder mehreren der Ansprüche 1 bis 8,
**dadurch gekennzeichnet,**
**daß** die Sende-/ und Empfangseinheit(en) manuell oder automatisch in horizontaler und/odervertikaler Anbringungsposition und/oder in mindestens einer Neigungsrichtung verstellbar angebracht ist.

10. Vorrichtung nach einem oder mehreren der Ansprüche 1 bis 9,
**dadurch gekennzeichnet,**
**daß** Mittel vorhanden sind, die das Ende beziehungsweise den Anfang einer Bearbeitungsgrenze (7;8) oder Leitgröße erkennen, dies dann dem Fahrer mitteilen und über bekannte Mittel einer Feldende- bzw. Anfangsautomatik zuführen.

11. Vorrichtung nach einem odermehreren der Ansprüche 1 bis 10,
**dadurch gekennzeichnet,**
**daß** Einrichtungen vorhanden sind, die es ermöglichen, ermittelte Entfernungswerte und die dazugehörenden bearbeitungsgrenzenspezifischen Größen, In Verbindung einer absoluten Position, beispielsweise D-GPS Koordinaten, beziehungsweise einer relativen Position, beispielsweise dem Scanwinkel, zur Arbeitsmaschine (3;10) abspeichem zu können.

12. Verfahren zur Ermittlung einer Bearbeitungsgrenze oder Leitgröße, welches folgende Verfahrensschrftte beinhaltet:
- Aussendung einer elektromagnetischen Welle,
- Empfang der reflektierten, elektromagnetischen Welle und Auswertung nach einer ersten bearbeitungsgrenzenspezifischen Größe und mindestens einer weiteren bearbeitungsgrenzenspezifischen Größe,
- Abspeichern der einzelnen Meßwerte
- Berechnung einzelner Konturen über eine Vorrichtungsarbeitsbreite aus den einzelnen Meßwerten,
- Meßwerte einer Vorrichtungsarbeitsbreite nach ausgewähltem Auswerteverfahren untersuchten,
- Generierung einer ist-Position der Bearbeitungsgrenze oder Leitgröße,
- Regeldifferenz aus dem Vergleich der ist-Position/ Soll-Position ermitteln und eine Stellgröße für die automatische Lenkung generieren.

13. Verfahren nach Anspruch 12,
**dadurch gekennzeichnet,**
**daß** die Meßwerte einer Vorrichtungsarbeitsbreite auf mindestens einen zugehörigen Meßwert normiert ausgewertet werden.

14. Verfahren einem der Ansprüche 12 oder 13,
**dadurch gekennzeichnet,**
**daß** zur Erkennung einer Bearbeitungsgrenze (7;8) oder Leitgröße ein Auswerteverfahren automatisch ausgewählt wird.

15. Verfahren nach einem oder mehreren der Ansprüche 12 bis 14,
**dadurch gekennzeichnet,**
**daß** ein Auswerteverfahren nach der Zuordnung Meßgröße/ größter beziehungsweise kleinster Meßwert/ größer Meßwertsprung (13) und dessen jeweilige Position ausgewählt wird, indem die Meßgrößen über eine Vorrichtungsarbeitsbreite nach den Stellen mit den größten Meßwerten (12) beziehungsweise kleinsten Meßwerten (12) beziehungsweise nach dem größtem Meßwertsprung (13) abgesucht werden.

16. Verfahren nach einem oder mehreren der Ansprüche 12 bis 15,
**dadurch gekennzeichnet, daß** die Ist-Position einer Bearbeitungsgrenze (7;8) oder Leitgröße durch eine Kombination von Meßgrößeneigenschaften über eine oder mehrere Vorrichtungsarbeitsbreiten abgeleitet wird.

17. Verfahren nach einem oder mehreren der Ansprüche 12 bis 16,
**dadurch gekennzeichnet,**
**daß** zur sicheren Erkennung einer Bearbeitungskante (8) oder Furche (7) die Meßgrößen, über mindestens eine Vorrichtungsarbeitsbreite, nach der Position des höchsten Sprungwertes einer bearbeitungsgrenzenspezifischen Größe und nach der Position des höchsten Sprungwertes der Entfernungsmessung untersucht werden und bei annähernder Übereinstimmung zweier Sprungstellen, diese als Ist-Position ausgewählt wird.

18. Verfahren nach einem oder mehreren der Ansprüche 12 bis 17,
**dadurch gekennzeichnet,**
**daß**, wenn aus nur einer Meßgröße ein Sprungwert selektiert werden kann, dieser als Ist-Position ausgewählt wird.

19. Verfahren nach einem oder mehreren der Ansprüche 12 bis 18,
**dadurch gekennzeichnet,**
**daß** aus den Meßgrößen das Ende beziehunasweise der Anfang einer Bearbeitungsgrenze (7;8) oder Leitgröße ermittelt wird.

20. Verfahren nach Anspruch 19,
**dadurch gekennzeichnet,**
**daß** das erkannte Ende beziehungsweise der erkannte Anfang dem Fahrzeugführer angezeigt beziehungsweise eine Feldende- bzw. Anfangsautomatik aktiviert.

21. Verfahren nach einem oder mehreren der Ansprüche 12 bis 20,
**dadurch gekennzeichnet,**
**daß** die ermittelte Ist-Position der Bearbeitungsgrenze (7;8) beziehungsweise Leitgröße direkt oder um einem Offset, Vorrichtungsanbringungsortund/oder Arbeitsbreitenkorrekturwert manuell beziehungsweise automatisch korrigiert, einer automatischen Fahrzeuglenkung zugeführt wird.

22. Verfahren nach einem oder mehreren der Ansprüche 12 bis 21,
**dadurch gekennzeichnet,**
**daß** die Sende-/ und Empfangseinheit(en) in ihrer Anbringungsposition oder Neigung so geregelt beziehungsweise gesteuert wird, daß mindestens elne ermittelte bearbeitungsgrenzenspezifische Größe konstant gehalten wird.

23. Verfahren nach einem oder mehreren der Ansprüche 12 bis 22,
**dadurch gekennzeichnet,**
**daß** die ermittelten Entternungswerte und die dazugehörende bearbeitungsgrenzenspezifische Größe einer absoluten Position, beispielsweise D-GPS Koordinaten, beziehungsweise einer relativen Position, beispielsweise dem Scanwinkel zur Arbeitsmaschine (3;10), zugeordnet und abgespeichert werden.

## Claims

1. Apparatus for contactlessly detecting working limits or guidance parameters for automatically steering agricultural working machines (3; 10) along a guidance parameter which was produced by a preceding, identical or different working operation and which is determining in respect of the following or ensuing working step, wherein the apparatus (5) is arranged above the working limit (7; 8) and comprises at least one transmitting device which emits electromagnetic waves in such a way that the working limits (7; 8) or guidance parameters are detected ahead in the working direction and at least one receiving device in which there are means which ascertains the distance in relation to individual wave reflection points by transit time measurement, **characterised in that** there are means which from the reflection of a transmitted electromagnetic wave ascertain the intensity and the phase shift.

2. Apparatus according to claim 1 **characterised in that** the intensity is ascertained from the wave reflection, as a working limit-specific parameter.

3. Apparatus according to claim 1 or claim 2 **characterised in that** the phase shift is ascertained from the wave reflection, as a working limit-specific parameter.

4. Apparatus according to one or more of claims 1 to 3 **characterised in that** at least one transmitting device and one or more receiving devices are used in an array arrangement.

5. Apparatus according to one or more of claims 1 and 4 **characterised in that** the transmitting and receiving device respectively is a scanning device.

6. Apparatus according to one or more of claims 1 to 5 **characterised in that** the apparatus working width can be adapted to the situation of use and can have only a few scanning angle degrees, for example +/- 6° around the centre of the pivotal range.

7. Apparatus according to one or more of claims 1 to 6 **characterised in that** by way of suitable means the calculation procedure for generating the working limit or guidance parameter respectively, the procedure adapted to the correspondingly applicable working limit (7; 8) or guidance parameter respectively can be selected automatically or manually.

8. Apparatus according to one or more of claims 1 to 7 **characterised in that** there are means which make it possible to feed the position/location of the working limit (7; 8) or guidance parameter respectively directly or corrected, with an offset, apparatus mounting location and/or working width correction value, to an automatic vehicle steering system by way of known means such as for example a vehicle bus system.

9. Apparatus according to one or more of claims 1 to 8 **characterised in that** the transmitting/and receiving unit(s) is mounted adjustably manually or automatically in a horizontal and/or vertical mounting position and/or in at least one inclined direction.

10. Apparatus according to one or more of claims 1 to 9 **characterised in that** there are provided means which detect the end or the beginning respectively of a working limit (7; 8) or guidance parameter, then communicate same to the driver and feed same by way of known means to an automatic field end or beginning system.

11. Apparatus according to one or more of claims 1 to 10 **characterised in that** there are provided devices which make it possible to store ascertained distance values and the associated working limit-specific parameters, in conjunction with an absolute position, for example D-GPS co-ordinates, or a relative position, for example the scanning angle, with respect to the working machine (3; 10).

12. A method of ascertaining a working limit or guidance parameter, which includes the following method steps:
- emitting an electromagnetic wave,
- receiving the reflected electromagnetic wave and evaluating same in accordance with a first working limit-specific parameter and at least one further working limit-specific parameter,
- storing the individual measurement values,
- calculating individual contours over an apparatus working width from the individual measurement values,
- investigating measurement values of an apparatus working width in accordance with selected evaluation procedures,
- generating an actual position in respect of the working limit or guidance parameter, and
- ascertaining a regulating difference from the comparison of the actual position/reference position and generating a control parameter for the automatic steering.

13. A method according to claim 12 **characterised in that** the measurement values of an apparatus working width are evaluated standardised to at least one associated measurement value.

14. A method according to one of claims 12 and 13 **characterised in that** an evaluation procedure is automatically selected for detecting a working limit (7; 8) or guidance parameter.

15. A method according to one or more of claims 12 to 14 **characterised in that** an evaluation method is selected in accordance with the association measurement parameter/largest or smallest measurement value respectively/large measurement value jump (13) and the respective position thereof by a procedure whereby the measurement parameters over an apparatus working width are searched in accordance with the locations with the largest measurement values (12) or smallest measurement values (12) respectively or in accordance with the largest measurement value jump (13).

16. A method according to one or more of claims 12 to 15 **characterised in that** the actual position of a working limit (7; 8) or guidance parameter is derived by a combination of measurement parameter properties over one or more apparatus working widths.

17. A method according to one or more of claims 12 to 16 **characterised in that** for reliably detecting a working edge (8) or furrow (7) the measurement parameters, over at least one apparatus working width, are investigated in accordance with the position of the highest jump value of a working limit-specific parameter and in accordance with the position of the highest jump value of the distance measurement and in the event of approximate coincidence of two jump locations same is selected as the actual position.

18. A method according to one or more of claims 12 to 17 **characterised in that**, if a jump value can be selected from only one measurement parameter, that value is selected as the actual position.

19. A method according to one or more of claims 12 to 18 **characterised in that** the end or the beginning respectively of a working limit (7; 8) or guidance parameter is ascertained from the measurement parameters.

20. A method according to claim 19 **characterised in that** the detected end or the detected beginning is displayed to the vehicle driver or an automatic field end or beginning system is activated.

21. A method according to one or more of claims 12 to 20 **characterised in that** the ascertained actual position of the working limit (7; 8) or guidance parameter is fed to an automatic vehicle steering system directly or corrected manually or automatically by an offset, apparatus mounting location and/or working width correction value.

22. A method according to one or more of claims 12 to 21 **characterised in that** the transmitting/and receiving unit(s) are so regulated or controlled in respect of their mounting position or inclination that at least one ascertained working limit-specific parameter is kept constant.

23. A method according to one or more of claims 12 to 22 **characterised in that** the ascertained distance values and the related working limit-specific parameter are associated with an absolute position, for example D-GPS co-ordinates, or a relative position, for example the scanning angle, in relation to the working machine (3; 10), and are stored.

## Revendications

1. Dispositif pour la reconnaissance sans contact de limites de zone de travail ou de grandeurs de référence pour le guidage automatique de machines de travail (3, 10) agricoles le long d'une grandeur de référence qui a été produite au cours d'une étape de travail antérieure, identique ou différente, et est déterminante pour l'étape de travail à venir ou consécutive, le dispositif (5) étant disposé au-dessus de la limite de zone de travail (7; 8) et étant formé d'au moins un dispositif émetteur qui émet des ondes électromagnétiques d'une manière telle, que les limites de zone de travail (7; 8) ou les grandeurs de référence soient détectées à l'avance dans la direction de travail, et d'au moins un dispositif récepteur dans lequel sont prévus des moyens qui déterminent par mesure du temps de propagation la distance par rapport aux différents points de réflexion des ondes, **caractérisé en ce qu'**il est prévu des moyens qui, à partir de la réflexion d'une onde électromagnétique émise, déterminent l'intensité et le décalage de phase.

2. Dispositif selon la revendication 1, **caractérisé en ce qu'**à partir de la réflexion d'ondes, on détermine l'intensité en tant qu'une grandeur spécifique des limites de zone de travail.

3. Dispositif selon la revendication 1 ou 2, **caractérisé en ce qu'**à partir de la réflexion d'ondes, on détermine le déphasage en tant qu'une grandeur spécifique des limites de zone de travail.

4. Dispositif selon une ou plusieurs des revendications 1 à 3, **caractérisé en ce qu'**on utilise au moins un dispositif émetteur et un ou plusieurs dispositifs récepteurs disposés en réseau.

5. Dispositif selon une ou plusieurs des revendications 1 à 4, **caractérisé en ce que** le dispositif émetteur, voire le dispositif récepteur, est un dispositif à balayage.

6. Dispositif selon une ou plusieurs des revendications 1 à 5, **caractérisé en ce que** la largeur de travail du dispositif peut être adaptée en fonction de l'utilisation et peut ne représenter que quelques degrés d'angle de balayage, par exemple +/- 6° autour du centre de la zone de pivotement.

7. Dispositif selon une ou plusieurs des revendications 1 à 6, **caractérisé en ce que** grâce à des moyens adaptés, le procédé de calcul pour la génération d'une limite de zone de travail ou d'une grandeur de référence et le procédé adapté à la limite de zone de travail ou à la grandeur de référence présente peuvent sélectionnés de manière automatique ou manuelle.

8. Dispositif selon une ou plusieurs des revendications 1 à 7, **caractérisé en ce qu'**il est prévu des moyens qui permettent de transmettre la position/situation de la limite de zone de travail (7, 8) ou la grandeur de référence, de manière directe ou après correction, avec un décalage, une valeur de correction de site d'utilisation et/ou de largeur de travail, à une direction automatique de véhicule, par des moyens connus, par exemple via un système de bus de véhicule.

9. Dispositif selon une ou plusieurs des revendications 1 à 8, **caractérisé en ce que** les unités d'émission et les unités de réception sont montées réglables manuellement ou de manière automatique dans la position horizontale et/ou verticale et/ou dans au moins une direction d'inclinaison.

10. Dispositif selon une ou plusieurs des revendications 1 à 9, **caractérisé en ce qu'**il est prévu des moyens qui détectent la fin ou le début d'une limite de zone de travail (7, 8) ou d'une grandeur de référence, la signalent au conducteur et la transmettent par des moyens connus à un automatisme de fin ou de début de champ.

11. Dispositif selon une ou plusieurs des revendications 1 à 10, **caractérisé en ce qu'**il est prévu des dispositifs qui permettent de mémoriser des valeurs de distance déterminées et les grandeurs associées spécifiques des limites de zone de travail en relation avec une position absolue, par exemple des coordonnées D-GPS, ou avec une position relative, par exemple l'angle de balayage par rapport à la machine de travail (3; 10).

12. Procédé de détection d'une limite de zone de travail ou d'une grandeur de référence comportant les étapes suivantes:
- émission d'une onde électromagnétique,
- réception de l'onde électromagnétique réfléchie et exploitation en fonction d'une première grandeur spécifique de limite de zone de travail et d'au moins une grandeur spécifique de limite de zone de travail supplémentaire,
- mémorisation des différentes valeurs de mesure,
- calcul de contours individuels en fonction d'une largeur de travail de dispositif à partir des différentes valeurs de mesure,
- examen des valeurs de mesure pour une largeur de travail de dispositif par un procédé d'exploitation sélectionné,
- génération d'une position réelle de la limite de zone de travail ou de la grandeur de référence,
- détermination de la différence de réglage à partir de la comparaison position réelle/position de consigne et génération d'une grandeur de réglage pour le guidage automatique.

13. Procédé selon la revendication 12, **caractérisé en ce que** les valeurs de mesure d'une largeur de travail de dispositif sont exploitées de manière normée sur au moins une valeur de mesure associée.

14. Procédé selon une des revendications 12 ou 13, **caractérisé en ce que** pour reconnaître une limite de zone de travail (7, 8) ou une grandeur de référence, un procédé d'exploitation est sélectionné de manière automatique.

15. Procédé selon une ou plusieurs des revendications 12 à 14, **caractérisé en ce qu'**un procédé d'exploitation est sélectionné en fonction de la relation grandeur de mesure/ valeur de mesure maximale ou minimale/plus grande différence de niveau de valeur de mesure (13) et de sa position associée, en explorant les grandeurs de mesure sur une largeur de travail de dispositif à la recherche des points avec les valeurs de mesure (17) les plus élevées ou les valeurs de mesure (12) les plus faibles ou de la plus grande différence de niveau de valeur de mesure (13).

16. Procédé selon une ou plusieurs des revendications 12 à 15, **caractérisé en ce que** la position réelle d'une limite de zone de travail ou d'une grandeur de référence est déduite par une combinaison de caractéristiques de grandeurs de mesure sur une ou sur plusieurs largeur(s) de travail de dispositif.

17. Procédé selon une ou plusieurs des revendications 12 à 16, **caractérisé en ce que** pour reconnaître de manière sûre un bord (8) de zone de travail ou un sillon (7), on recherche sur au moins une largeur de travail de dispositif la position de la plus grande différence de niveau d'une grandeur spécifique de limite de zone de travail et la position de la plus grande différence de niveau de la mesure de distance et en cas de coïncidence approchée on sélectionne celles-ci comme position réelle.

18. Procédé selon une ou plusieurs des revendications 12 à 17, **caractérisé en ce que** lorsque pour une grandeur de mesure seule une différence de niveau peut être sélectionnée, celle-ci est sélectionnée comme position réelle.

19. Procédé selon une ou plusieurs des revendications 12 à 18, **caractérisé en ce qu'**à partir des grandeurs de mesure on détermine la fin ou le début d'une limite de zone de travail (7, 8) d'une grandeur de référence.

20. Procédé selon la revendication 19, **caractérisé en ce que** la fin détectée ou le début détecté est signalé au conducteur du véhicule, ou un automatisme de fin de champ ou de début de champ est activé.

21. Procédé selon une ou plusieurs des revendications 12 à 20, **caractérisé en ce que**, lorsque pour une grandeur de mesure seule, une différence de niveau peut être sélectionnée, celle-ci est sélectionnée comme position réelle.

22. Procédé selon une ou plusieurs des revendications 12 à 21, **caractérisé en ce que** le dispositif émetteur /les dispositifs récepteurs dans leur position de montage ou leur inclinaison sont réglés ou commandés de telle sorte qu'au moins une grandeur spécifique de limite de zone de travail déterminée soit constante.

23. Procédé selon une ou plusieurs des revendications 12 à 22, **caractérisé en ce que** les valeurs de distance déterminées et la grandeur spécifique de limite de zone de travail correspondante sont associées à une position absolue, par exemple coordonnées D-GPS, ou à une position relative, par exemple angle de balayage par rapport à la machine de travail (3; 10) et mémorisées.
